# EUROPÄISCHE PATENTANMELDUNG

(11) **EP 0 668 707 A2**
(43) Veröffentlichungstag der Anmeldung: **23.08.1995**
(21) Anmeldenummer: 95102097.3
(22) Anmeldetag: 15.02.1995
(51) Int. Cl.: H04Q 11/04, H04L 12/28

(54) **Anschlussleitungsnetz**

(30) Priorität: 21.02.1994 DE 4405460
(71) Anmelder: SIEMENS AKTIENGESELLSCHAFT, 80333 München (DE)
(72) Erfinder: Stein, Karl-Ulrich, Dr., D-82008 Unterhaching (DE)

(57) **Zusammenfassung**

Ein bereits vorhandenes Anschlußleitungsnetz in Baumstruktur mit Koaxialanschlußleitungen (COA) als Punkt-Zu-Mehrpunkt-Verbindungen zwischen einer zentralen Einrichtung und mehreren Teilnehmern, zu denen Informationen gemäß einem Zeitmultiplexverfahren mit einer Gesamtübertragungsbitrate übertragen werden, ist in mehrere koaxiale Teilnetze (CN1, CN2) mit Baumstruktur unterteilt. In jedem Teilnetz (CN1, CN2) ist die Gesamtübertragungsbitrate den Teilnehmern des Teilnetzes (CN1, CN2) je nach Bedarf des einzelnen Teilnehmers an individueller Übertragungsbitrate zur Übertragung der Informationen in der Übertragungsrichtung zu den Teilnehmern hin oder in der Übertragungsrichtung von den Teilnehmern weg zugeteilt.

## Beschreibung

Die Erfindung betrifft ein Anschlußleitungsnetz gemäß dem Oberbegriff des Patentanspruchs 1.

Telekommunikationsnetze sind in zunehmendem Maße aus wenigen Netzebenen aufgebaut, von denen als Hauptebenen das Anschlußleitungsnetz und das Transportnetz gelten. Die existierenden übertragungstechnischen Kommunikationsnetze sind "natürlich gewachsene" Netze, die - angepaßt an die jeweiligen Dienste, das Verkehrsaufkommen usw.- geplant und realisiert worden sind. So hat überwiegend der vermittelte Fernsprechdienst die Planung und Realisierung der Kommunikationsnetze bestimmt. Mit der Einführung der synchronen Netze und der Verfügbarkeit der entsprechenden Netzelemente ist das Diensteangebot über den vermittelten Fernsprechdienst hinaus erweitert worden, so daß neben schmalbandigen Diensten für Sprache und Daten auch Breitband-und Datendienste für den Austausch großer Datenmengen (z.B. Rechner-Rechner-Kommunikation), für die Übertragung von Bildern usw., den Teilnehmern in einem Kommunikationsnetz zur Verfügung stehen.Ein vom Fernsprechdienst bis zum interaktiven Breitbanddienst reichendes Diensteangebot erfordert unterschiedliche Übertragungsbitraten bzw. -kapazitäten zur Übertragung analoger und digitaler Informationen nach bekannten Zeitmultiplexverfahren (ATM - Asynchronous Transfer Modus, STM - Synchronous Transfer Modus).

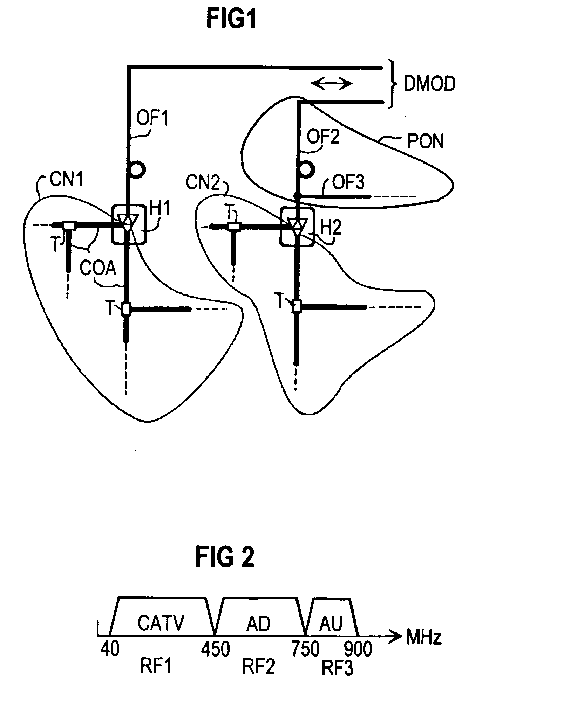

Das Anschlußleitungsnetz im Telekommunikationsnetz hat wegen der bereits flächendeckend eingeführten Zweidraht- oder Koaxialanschlußleitungen im Teilnehmeranschlußbereich und der damit verbundenen bewährten Kupferübertragungstechnik gegenüber der neu zu installierenden Glasfaser- übertragungstechnik eine erhebliche wirtschaftliche Bedeutung. Das Anschlußleitungsnetz erstreckt sich in der Regel zwischen einer zentralen Einrichtung - wie beispielsweise einer digitalen Vermittlungseinrichtung, einer Verteilstation für analoges Kabelfernsehen (CATV) oder dergleichen - und den Teilnehmern bzw. deren Endgeräten.Aus dem Aufsatz "Time Warner's magic kingdom", von Richard Karpinski in Telephony, Nov. 1, 1993, Seiten 48 bis 53 ist ein Telekommunikationsnetz bekannt, das ein Anschlußleitungsnetz in Baumstruktur mit Koaxialanschlußleitungen als Punkt- zu -Mehrpunkt-Verbindungen für die Übertragung von analogen und digitalen Informationen zu einer Vielzahl von Teilnehmern aufweist (siehe Figur 1). Das Frequenzspektrum im koaxialen Baumnetz reicht von einem ersten Frequenzbereich zur analogen Informationsübertragung zwischen ca.50 MHz und 450 MHz über einen unmittelbar darüberliegenden zweiten Frequenzbereich zur digitalen Informationsübertragung zwischen 450 MHz und 750 MHz bis zu einem über 750 MHz liegenden Frequenzbereich zur bidirektionalen Informationsübertragung (siehe Figur 2).

Die Aufgabe der vorliegenden Erfindung besteht darin, das vorhandene Anschlußleitungsnetz der eingangs genannten Art ohne Eingriff in die Netzarchitektur oder das für Koaxialanschlußleitungen typische Frequenzspektrum flexibler zu gestalten.

Diese Aufgabe wird durch die Merkmale des Patentanspruchs 1 gelöst. Weiterbildungen der Erfindung sind in den Unteransprüchen angegeben.

Durch die Zerstückelung des bereits vorhandenen Koax-Baumnetzes in mehrere kleinere koaxiale Teilnetze, die ebenfalls Baumstruktur aufweisen, ergibt sich im Teilnehmeranschlußbereich eines Telekommunikationsnetzes die Möglichkeit, die Gesamtübertragungskapazität bzw. -übertragungsbitrate den Teilnehmern in jedem Teilnetz je nach Bedarf des einzelnen Teilnehmers an individueller Übertragungsbitrate zur Informationsübertragung in beiden Übertragungsrichtungen zu den Teilnehmern/von den Teilnehmern zuzuteilen. Da die gesamte Übertragungskapazität bzw. -bitrate auf weniger Teilnehmer in jedem Teilnetz aufgeteilt wird, steht jedem einzelnen Teilnehmer im Mittel eine größere Kapazität zur Nutzung unterschiedlicher Schmal- und Breitbanddienste zur Verfügung. Durch Verwendung geeigneter Übertragungsverfahren in Richtung zu den Teilnehmern/von den Teilnehmern können die individuellen Übertragungsbitraten nach Bedarf der Teilnehmer - und sogar von Verbindung zu Verbindung veränderbar - flexibel zugeteilt werden.

Auf diese Weise umfaßt beispielsweise ein erstes koaxiales Teilnetz eine Vielzahl von Teilnehmern für die Nutzung einiger weniger Schmalbanddienste - wie beispielsweise Fernsprechen, analoges Fernsehen über Kabel (CATV) - , während ein zweites koaxiales Teilnetz nur für wenige Teilnehmer zur Nutzung einer Mehrzahl von Diensten bis hin zu interaktiven Breitbanddiensten ausgelegt ist. Steigt gegenüber den im Teilnehmeranschlußbereich am häufigsten genutzten Schmalbanddiensten der Bedarf an Bandbreite des einzelnen Teilnehmers - beispielsweise durch Nutzung von Informationsabrufsystemen (z.B. Video on Demand) - , kann die Anzahl der Teilnehmer im Koax-Teilnetz durch Aufteilen der bereits bestehenden Baumarchitektur in weitere Teilbäume flexibel festgelegt werden. Dies geschieht ohne Veränderung der bereits bestehenden Netzarchitektur und ohne Eingriff in das für die Koaxialanschlußleitungen des Koax-Baumnetzes festgelegte Frequenzspektrum.

Von Vorteil ist dabei, daß jedem koaxialen Teilnetz eine zugehörige optische Anschlußleitung zugeführt ist. Die optische Anschlußleitung besteht vorzugsweise aus einem Lichtwellenleiter mit einer optischen Faser zur optischen Informationsübertragung in beiden Übertragungsrichtungen von den Teilnehmern bzw. zu den Teilnehmern . Eine alternative Lösung sieht ein Lichtwellenleiterkabel mit mehreren optischen Fasern zur Trennung der beiden Übertragungsrichtungen und/oder unterschiedlicher Dienste vor.

Das Bindeglied zwischen der optischen Anschlußleitung und dem koaxialen Teilnetz, d.h. einer der zugehörigen Koaxialanschlußleitungen, bildet dabei eine Umsetzeinrichtung zur Umsetzung optischer Signale in elektrische Signale in der Übertragungsrichtung zu den Teilnehmern hin und zur Umsetzung elektrischer Signale in optische Signale in der Übertragungsrichtung von den Teilnehmern weg sowie zur jeweiligen Verstärkung der elektrischen und der optischen Signale für die jeweils nachfolgende Übertragung.

Von Vorteil ist es weiterhin, bei noch größerem Bandbreitenbedarf der einzelnen Teilnehmer eines koaxialen Teilnetzes die zugeführte optische Anschlußleitung in ein zusätzlich vorgesehenes passives optisches Teilnehmeranschlußleitungsnetz zu integrieren.

Ein Ausführungsbeispiel der Erfindung wird anhand von Figuren erläutert.

Es zeigen
Figur 1 ein Prinzipschaltbild des in beispielsweise zwei koaxiale Teilnetze aufgeteilten Anschlußleitungsnetzes in Baumstruktur,
Figur 2 ein Beispiel für das Frequenzspektrum der Koaxialanschlußleitungen im Teilnetz und
Figur 3 ein Prinzipschaltbild vom Aufbau der bidirektional ausgebildeten Umsetzeinrichtung für das jeweilige koaxiale Teilnetz.

Figur 1 zeigt in prinzipieller Darstellung ein Anschlußleitungsnetz, das beispielsweise in zwei voneinander getrennte koaxiale Teilnetze CN1 und CN2 unterteilt ist. Eine andere Unterteilung in mehr als zwei Teilnetze ist beliebig möglich Dabei weist jedes koaxiale Teilnetz CN1 oder CN2 eine Baumstruktur auf, deren Zweige von Koaxialanschlußleitungen COA gebildet werden, die als Punkt-zu Mehrpunkt-Verbindungen wirken. Die Koaxialanschlußleitungen COA sind teilnehmerseitig jeweils mit einer nicht dargestellten Netzabschlußeinrichtung (Network Termination) zum Anschließen eines oder mehrerer Kommunikationsendgeräte des jeweiligen Teilnehmers verbunden. Die Koaxialanschlußleitungen COA sind in jedem Teilnetz CN1 oder CN2 an Verzweigungseinrichtungen T zusammengeführt, die Knotenpunkte für die angeschlossenen Zweige darstellen.

Zu den Teilnetzen CN1, CN2 führen optische Anschlußleitungen OF1, OF2. Die aus einer oder mehreren optischen Fasern eines Lichtwellenleiters oder eines Lichtwellenleiterkabels bestehenden optischen Anschlußleitungen OF1, OF2 dienen für die koaxialen Teilnetze CN1, CN2 als Speiseleitungen (Fiber Feeders), auf denen die analogen und digitalen Informationen optisch übertragen werden. Die optische Informationsübertragung erfolgt dabei bidirektional, d.h. in der Übertragungsrichtung von einer an jede optische Anschlußleitung OF1 oder OF2 angeschlossenen Verteilstation DMOD (Distribution Module) zu den Teilnehmern des Teilnetzes CN1 oder CN2 ("downlink") und in der umgekehrten Übertragungsrichtung von den Teilnehmern zur Verteilstation ("uplink").

Das Bindeglied zwischen den Teilnetzen CN1, CN2 mit den Koaxialanschlußleitungen COA und den optischen Anschlußleitungen OF1, OF2 bilden Umsetzeinrichtungen H1, H2. Jede Umsetzeinrichtung H1 oder H2 arbeitet bidirektional, d.h. als Zweiwegeverstärker zur Verstärkung und Umsetzung der optischen Signale in elektrische Signale in der Übertragungsrichtung "downlink" und zur Verstärkung und Umsetzung der elektrischen Signale in optische Signale in der Übertragungsrichtung "uplink".

Es besteht darüber hinaus die Möglichkeit, den koaxialen Teilnetzen CN1, CN2 ein passives optisches Teilnehmeranschlußleitungsnetz PON (Passive Optical Network), das nur aus Lichtwellenleitern aufgebaut ist, zu überlagern. Dabei ist die zu einem koaxialen Teilnetz führende optische Anschlußleitung integraler Bestandteil des passiven optischen Netzes PON. Dies ist in Figur 1 am Beispiel der optischen Anschlußleitung OF2 gezeigt, die einerseits als Speiseleitung zum koaxialen Teilnetz CN2 führt und andererseits Bestandteil des passiven optischen Netzes PON mit einem weiteren Lichtwellenleiter OF3 ist.

Die zur Informationsübertragung vorgesehene Gesamtübertragungsbitrate wird jedem koaxialem Teilnetz CN1 oder CN2 über die optische Anschlußleitung OF1 oder OF2 zur Verfügung gestellt und den Teilnehmern des Teilnetzes CN1 oder CN2 je nach Bedarf an individueller Übertragungsbitrate des einzelnen Teilnehmers für die Nutzung unterschiedlicher Dienste zugehöriger Dienstebitrate zugeteilt. Damit kann in den koaxialen Teilnetzen CN1, CN2 des Anschlußleitungsnetzes einer geringeren Anzahl von Teilnehmern durch individuelles Aufteilen der Gesamtübertragungsbitrate im Mittel eine höhere Kapazität zur Verfügung gestellt werden.

Durch Einfügen weiterer optischer Anschlußleitungen und gegebenenfalls zusätzlicher Verteilstationen ist es möglich, die jeweiligen Teilnetze CN1, CN2 durch Aufteilen ihrer Baumstruktur weiter zu unterteilen, ohne in die Netzarchitektur oder das - an späterer Stelle näher beschriebene - Frequenzspektrum der einzelnen Koax-Bäume für die bidirektionale Informationsübertragung von/zu den Teilnehmern verändernd einzugreifen.

Beträgt die Gesamtübertragungsbitrate in der Abwärtsrichtung "downlink" beispielsweise 600 MBit/s, so kann im Teilnetz CN1 über die Koaxialanschlußleitungen COA neben dem analogen Fernsehen über Kabel (CATV) Fernsprechen für bis zu 2000 und mehr Fernsprechteilnehmer angeboten werden, während bei Nutzung des gegenüber dem Fernsprechen breitbandigeren Informationsabrufdienstes - wie beispielsweise Video on Demand - die Anzahl der Teilnehmer im Teilnetz CN2 wegen der erhöhten Dienstebitrate auf beispielsweise 100 zu begrenzen ist. Für den Fall, daß das koaxiale Teilnetz eine große Ausdehnung mit einer Vielzahl von Teilnehmern aufweist, ist das Teilnetz bidirektional aktiv mit Verstärkern auszulegen, während im umgekehrten Fall bei geringen Teilnehmerzahlen im koaxialen Teilnetz - beispielsweise bei der Nutzung von interaktiven Breitbanddiensten durch einige wenige Teilnehmer - das Teilnetz wenig ausgedehnt und daher rein passiv ohne Verstärker aufgebaut werden kann.

Figur 2 zeigt ein Beispiel für die Aufteilung des Frequenzspektrums für die Informationsübertragung auf den Koaxialanschlußleitungen des jeweiligen koaxialen Teilnetzes in Baumstruktur. Dabei werden in einem ersten Frequenzbereich RF1 von etwa 40 MHz bis etwa 450 MHz analoge Fernsehsignale (CATV), in einem zweiten Frequenzbereich RF2 von ca. 450 MHz bis ca. 750 MHz digitale Signale gemäß dem ATM-Verfahren (Asynchronous Transfer Modus) "downlink" und in einem dritten Frequenzbereich von etwa 750 MHz bis 900 MHz digitale Signale gemäß dem ATM-Verfahren "uplink" übertragen. Zur Unterscheidung der Übertragungskanäle in beiden Übertragungsrichtungen "downlink" und "uplink" besteht eine Frequenzweiche zwischen der oberen Bereichsgrenze des Frequenzbereichs RF2 und der unteren Bereichsgrenze des Frequenzbereich RF3 .

Beim ATM-Übertragungsverfahren wird zu jedem Teilnehmer des jeweiligen koaxialen Teilnetzes ein virtueller Pfad (VP, Virtual Path) fest eingerichtet, um dem Teilnehmer den Informationsaustausch in Abhängigkeit vom im koaxialen Teilnetz zur Verfügung stehenden Diensteangebot zu ermöglichen. Die Informationen werden zu Nachrichtenpaketen (Zellen) konstanter Länge zusammengefügt.

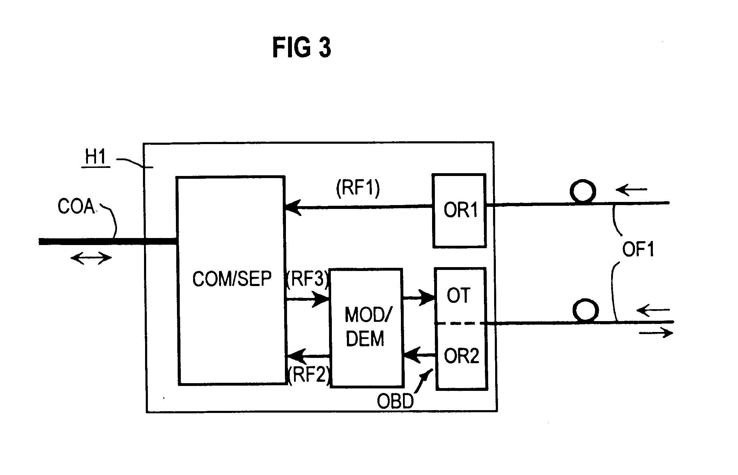

Figur 3 zeigt am Beispiel der Umsetzeinrichtung H1 den prinzipiellen Aufbau der Umsetzeinrichtungen als Bindeglieder zwischen den Koaxialanschlußleitungen COA in den koaxialen Teilnetzen und den den Teilnetzen zugeführten optischen Anschlußleitungen. Die zur Umsetzeinrichtung H1 führende optische Anschlußleitung OF1 umfaßt im gewählten Beispiel zwei voneinander getrennte Fasern eines Lichtwellenleiterkabels, von denen die eine Faser zur unidirektionalen Übertragung der analogen Fernsehsignale (CATV) in der Übertragungsrichtung zu den Teilnehmern vorgesehen ist, während über die andere Faser die bidirektionale Übertragung von digitalen Informationen zu den Teilnehmern hin gemäß dem ATM-Übertragungsverfahren durchgeführt wird. Die Zusammenfassung der beiden Übertragungsrichtungen über eine einzige optische Faser eines Lichtwellenleiters ist ebenfalls möglich.

An die zur analogen Informationsübertragung vorgesehene Faser ist eine optische Empfangseinrichtung OR1 für den gemäß Figur 2 festgelegten Frequenzbereich RF1 angeschaltet. Parallel dazu ist die für die digitale Informationsübertragung verwendete Faser an eine bidirektional ausgebildete optische Einrichtung OBD angeschlossen, die zur digitalen Informationsübertragung in der Übertragungsrichtung "downlink" eine optische Empfangseinrichtung OR2 (Receiver) und in der Übertragungsrichtung "uplink" eine entsprechende optische Sendeeinrichtung OT (Transceiver) aufweist.

Die Signale werden im koaxialen Teilnetz in der Übertragungsrichtung "downlink" im Frequenzbereich RF2 gemäß Figur 2 mit einer QAM-64-Modulation (Quadratic Amplitude Modulation) versehen. In der Übertragungsrichtung "uplink" erfolgt die digitale Informationsübertragung mit einer geeigneten Modulation - beispielsweise der 4-PSK (Phase Shift Keying) - in Verbindung mit einem geeigneten Multiplexverfahren für Punkt-zu-Mehrpunkt-Verbindungen - beispielsweise dem TDMA-Verfahren (Time Division Multiple Access) - übertragen. Die Übertragung der Informationen von den Teilnehmern weg erfolgt anhand von Datenbursts, deren Startzeitpunkt zentral derart gesteuert wird, daß die Datenströme sich im Empfänger nicht unzulässigerweise gegenseitig beeinflussen. Den zugehörigen Frequenzbereich RF 3 für "uplink" zeigt Figur 2. In der Umsetzeinrichtung H1 ist ein Modulator für die Übertragungsrichtung "downlink" und ein entsprechender Demodulator für die Übertragungsrichtung "uplink" an die bidirektionale optische Einrichtung OBD angeschaltet.

Darüber hinaus verfügt die Umsetzeinrichtung H1 über eine teilnehmerseitig mit der Koaxialanschlußleitung COA verbundene Einrichtung COM/SEP, von der die in den Frequenzbereichen RF1 und RF2 analog und digital übertragenen Informationen für die Übertragungsrichtung "downlink" zusammengefügt und von der die von den Teilnehmern über die Koaxialanschlußleitung COA ankommenden digitalen Informationen für die Übertragungsrichtung "uplink" im Frequenzbereich RF3 aufbereitet werden. Die Einrichtung COM/SEP besteht aus einer Kombination geeigneter Filterschaltungen, einem elektrischen Sender für das Aussenden der Signale "downlink" in das koaxiale Teilnetz und einem elektrischen Empfänger für den Empfang der Signale "uplink" aus dem koaxialen Teilnetz. Bevor die jeweiligen Signale die Umsetzeinrichtung H1 verlassen, werden sie von den bidirektional arbeitenden optischen Einrichtungen COM/SEP und OBD verstärkt.

## Patentansprüche

1. Anschlußleitungsnetz in Baumstruktur mit Koaxialanschlußleitungen (COA) als Punkt-zu-Mehrpunkt-Verbindungen zwischen einer zentralen Einrichtung und mehreren Teilnehmern, die die gemäß einem Zeitmultiplexverfahren mit einer Gesamtübertragungsbitrate übertragenen Informationen empfangen,
dadurch gekennzeichnet,
daß das Anschlußleitungsnetz in mindestens zwei koaxiale Teilnetze (CN1, CN2) mit Baumstruktur unterteilt und in jedem Teilnetz (CN1, CN2) die Gesamtübertragungsbitrate den Teilnehmern des Teilnetzes (CN1, CN2) je nach Bedarf des einzelnen Teilnehmers an individueller Übertragungsbitrate zur Übertragung der Informationen in der Übertragungsrichtung zu den Teilnehmern hin oder in der Übertragungsrichtung von den Teilnehmern weg zugeteilt ist.

2. Anschlußleitungsnetz nach Anspruch 1,
dadurch gekennzeichnet,
daß jedem koaxialen Teilnetz (CN1 oder CN2) eine optische Anschlußleitung (OF1 oder OF2) zur optischen Übertragung der Informationen zugeführt ist.

3. Anschlußleitungsnetz nach Anspruch 2,
dadurch gekennzeichnet,
daß die optische Anschlußleitung (OF1 oder OF2) aus einem Lichtwellenleiter mit einer optischen Faser zur optischen Übertragung der Informationen in beiden Übertragungsrichtungen besteht.

4. Anschlußleitungsnetz nach Anspruch 2,
dadurch gekennzeichnet,
daß die optische Anschlußleitung (OF1 oder OF2) aus einem Lichtwellenleiterkabel mit mindestens zwei optischen Fasern zur Trennung der beiden Übertragungsrichtungen und/oder zur Trennung der Informationen unterschiedlicher Dienste zugehöriger Übertragungsbitrate besteht.

5. Anschlußleitungsnetz nach Anspruch 2, 3 oder 4,
dadurch gekennzeichnet,
daß zur Anbindung der Koaxialanschlußleitungen (COA) der koaxialen Teilnetze (CN1, CN2) an die optischen Anschlußleitungen (OF1, OF2) Umsetzeinrichtungen (H1, H2) vorgesehen sind, die in der Übertragungsrichtung zu den Teilnehmern optische Signale in elektrische Signale und in der Übertragungsrichtung von den Teilnehmern elektrische Signale in optische Signale umsetzen und verstärken.

6. Anschlußleitungsnetz nach einem der Ansprüche 2 bis 5,
dadurch gekennzeichnet,
daß die einem koaxialen Teilnetz (z.B. CN2) zugeführte optische Anschlußleitung (z.B. OF2) Bestandteil eines zusätzlich zu den koaxialen Teilnetzen (CN1, CN2) vorgesehenen passiven optischen Teilnehmeranschlußleitungsnetzes (PON) ist.

7. Anschlußleitungsnetz nach einem der vorhergehenden Ansprüche,
dadurch gekennzeichnet,
daß in jedem Teilnetz (CN1 oder CN2) die Übertragung der Informationen in der Übertragungsrichtung zu den Teilnehmern nach dem Asynchronen Transfermodus durchgeführt wird, bei dem die Informationen zu Nachrichtenpaketen konstanter Länge zusammengefügt werden.

8. Anschlußleitungsnetz nach einem der vorhergehenden Ansprüche,
dadurch gekennzeichnet,
daß in jedem Teilnetz (CN1 oder CN2) die Übertragung der Informationen in der Übertragungsrichtung von den Teilnehmern nach dem TDMA-Verfahren durchgeführt wird, bei dem die Informationen in einen Übertragungsrahmen eingefügt werden.
